# EUROPEAN PATENT SPECIFICATION

(11) **EP 2 366 135 B1**
(45) Date of publication and mention of the grant of the patent: **27.03.2013**
(21) Application number: 09789646.8
(22) Date of filing: 07.05.2009
(51) Int. Cl.: G06F 3/044, G06F 3/02

(54) **DUAL INPUT KEYPAD FOR A PORTABLE ELECTRONIC DEVICE**
ZWEIFACH-EINGABE-TASTENFELD FÜR EIN TRAGBARES ELEKTRONISCHES GERÄT
CLAVIER À DOUBLE ENTRÉE POUR DISPOSITIF ÉLECTRONIQUE PORTABLE

(30) Priority: 17.11.2008 US 272166
(43) Date of publication of application: 21.09.2011
(73) Proprietor: Sony Ericsson Mobile Communications AB, 221 88 Lund (SE)
(72) Inventor: KIRKUP, Kevin, Scott, Raleigh NC 27615 (US)
(74) Representative: Valea AB
(86) International application number: PCT/US2009/043094
(87) International publication number: WO 2010/056390

(56) References cited:
- WO-A-2006/020305
- US-A- 5 917 906
- US-A1- 2005 179 647
- US-A1- 2006 238 517
- US-A1- 2007 115 263
- US-A1- 2007 296 702
- US-A1- 2008 238 706

## Description

### TECHNICAL FIELD OF THE INVENTION

The technology of the present disclosure relates generally to an input device for a portable electronic device such as a mobile telephone, and more particularly to a dual input keypad for a portable electronic device.

### DESCRIPTION OF THE RELATED ART

Portable electronic devices, such as mobile telephones, media players, personal digital assistants (PDAs), and others, are ever increasing in popularity. To avoid having to carry multiple devices, portable electronic devices are now being configured to provide a wide variety of functions. For example, a mobile telephone may no longer be used simply to make and receive telephone calls. A mobile telephone may also be a camera, an Internet browser for accessing news and information, an audiovisual media player, a messaging device (text, audio, and/or visual messages), a gaming device, a personal organizer, and have other functions as well.

Even with the increase of functionality, the physical size of portable electronic devices has been shrinking to provide better portability. It is desirable, therefore, to accommodate numerous and various user inputs within the small space of a portable electronic device, while maintaining broad functionality and usability. For example, it is not uncommon for a user to desire a full "QWERTY" keyboard, navigational inputs, dedicated function inputs, and others all spaced within the confines of a portable electronic device in a user friendly manner. Touch-sensitive screens also have been used as an alternative or supplement to key button input devices. Similar to the above, the small screen sizes common of the displays of portable electronic devices may limit the usefulness of a touch screen.

Keypad inputs may include tactile inputs by which a user physically presses an input item, such as a key or button. Capacitive sensitive input devices are known in the art and have been used in attempts enhance the ease of use of input devices. Capacitive input devices may be equipped with electronic capacitive sensors, which can sense when a finger, stylus, or other input instrument is proximate to or touches an input key or button. This permits the user to apply an input with a "capacitive touch", which does not require an actual tactile press of a button. Capacitive and tactile inputs, however, still have not been used to their full potential to provide broad functionality in a user friendly format within the confines of a portable electronic device.

US2007115263 describes a proximity-based mutually capacitance-sensitive touchpad that is disposed directly beneath a keypad keymat of a mobile telephone. Posts associated with each key pass through a mutually capacitance-sensitive sensor electrode grid of the touchpad such that the keypad posts do not interfere with touchpad detection and tracking of a pointing object that moves along the keypad surface, to thereby enable touchpad data entry, cursor control, and scroll bar control on a display of the mobile telephone, wherein the keypad posts actuate mechanical switches underneath the touchpad.

### SUMMARY

To improve the consumer experience with portable electronic devices, there is a need in the art for an improved input device that overcomes the difficulties associated with the small size, but large functionality, of portable electronic devices. Exemplary embodiments of the present invention combine the use of capacitive or other proximate sensors with tactile sensors in a manner that improves over prior input devices.

The input device may be a keypad input device in which at least some of the keys are dual-input keys. Of the potential dual inputs, one input is a capacitive input that may sense a finger, stylus, or other instrument proximate to or touching the key. The other input is a tactile input that responds to physical pressing of the key. The capacitive inputs typically may be used for navigation type functions, such as scrolling, zooming, moving a cursor or pointer, and the like. The tactile inputs may be employed for inputs typically associated with a particular input key. Such inputs may include character entry (numerical, text, symbols, etc), key-dedicated functional inputs (e.g., a call "send" key or other dedicated command), and the like. In one embodiment, a user may manually select either a tactile input mode or a capacitive input mode depending upon what type of inputs the user desires to make. In another embodiment, the device may have an auto mode that automatically selects the capacitive or tactile input mode based on the functional or operational state of the device, or based on the nature or a characteristic of the input. When a dual input key receives an input, the input is executed as a capacitive input or tactile input as is commensurate with the determined or selected input mode.

Therefore, according to one aspect of the invention, an input device for use in an electronic device comprises a plurality of keys, wherein at least a portion of the plurality of keys are dual input keys that include a proximate sensor for receiving a proximate input and a tactile sensor for receiving a tactile input. A controller is configured to determine an input mode, wherein the input mode is either a proximate input mode or a tactile input mode, and is configured to execute a user input to one of the dual input keys as either a tactile input or a proximate input as commensurate with the determined input mode. The controller is configured to determine the input mode as the proximate input mode or the tactile input mode based upon a characteristic of the user input. The controller is further configured to set the input mode to the tactile input mode when a dual input key is pressed within a specified time delay from the detection of a proximate input to the dual input key. The controller is also configured to set the input mode to the proximate input mode when a dual input key is not pressed within the time delay after the detection of the proximate input.

According to one embodiment of the input device, the dual input keys form a continuous proximate input zone on the input device.

According to one embodiment of the input device, the continuous proximate input zone has a V-shape.

According to one embodiment of the input device, the proximate sensor of each of the dual-input keys is a capacitive sensor for receiving a capacitive input.

According to one embodiment of the input device, the plurality of keys are keypad buttons.

According to one embodiment of the input device, the plurality of keys are touch screen surfaces.

According to one embodiment of the input device, the electronic device is operable in a plurality of device states, and the controller is further configured to determine the device state and set the input mode as the proximate input mode or the tactile input mode based upon the determined device state.

According to one embodiment of the input device, the controller is configured to receive a user input corresponding to a selection of an input mode, and is configured to set the input mode to either the tactile input mode or the proximate input mode as is commensurate with the user selected input mode.

Another aspect of the invention is a method of employing an input device for use in an electronic device, wherein the input device includes a plurality of keys and at least a portion of the plurality of keys are dual input keys for receiving a proximate input and a tactile input. The method comprises the steps of receiving a user input to one of the dual input keys, determining an input mode, wherein the input mode is either a proximate input mode or a tactile input mode. A characteristic of the user input is determined and it is decided whether the characteristic of the user input is associated with a proximate input or a tactile input, and the input mode is set to either the proximate input mode or the tactile input mode as is commensurate with the characteristic of the user input. A time delay is measured from a detection of a proximate input, and the input mode is set to the tactile input mode when a dual input key is pressed within the time delay. The input mode is set to the proximate input mode when a dual input key is not pressed within the time delay from the detection of the proximate input. The method also comprises executing the user input as either a proximate input or a tactile input as is commensurate with the determined input mode.

According to one embodiment of the method, the proximate input is a capacitive input.

According to one embodiment of the method, the determining step comprises receiving a user input corresponding to a selection of either the proximate input mode or the tactile input mode, and the input is executed as either a proximate input or a tactile input as is commensurate with the user selected input mode.

According to one embodiment of the method, the determining step comprises automatically determining the input mode.

According to one embodiment of the method, the determining step comprises determining a device state of the electronic device and deciding whether the device state is a proximate input state or a tactile input state, and the input mode is set as either the proximate input mode or the tactile input mode as is commensurate with the state of the electronic device.

According to one embodiment of the method, the proximate input is a navigational input and the tactile input is at least one of a character input or a dedicated key command.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the claims appended hereto.

Features that are described and/or illustrated with respect to one embodiment may be used in the same way or in a similar way in one or more other embodiments and/or in combination with or instead of the features of the other embodiments.

It should be emphasized that the terms "comprises" and "comprising," when used in this specification, are taken to specify the presence of stated features, integers, steps or components but do not preclude the presence or addition of one or more other features, integers, steps, components or groups thereof.

### BRIEF DESCRIPTION OF THE DRAWINGS

FIG. 1 is a schematic view of a mobile telephone as an exemplary electronic device for use in accordance with an embodiment of the present invention.
FIG. 2 is a schematic block diagram of operative portions of the mobile telephone of FIG. 1.
FIG. 3 is a schematic view of an exemplary dual-input key that may be used as part of an input device in the mobile telephone of FIG. 1.
FIG. 4 is a flowchart depicting an exemplary method of employing an input device in accordance with an embodiment of the present invention.
FIG. 5 is a flowchart depicting an exemplary method by which an electronic device controller may determine an input mode for executing inputs to an input device.
FIG. 6 is a schematic diagram of an exemplary input device for use in accordance with an embodiment of the present invention.
FIG. 7 is a schematic diagram of a communications system in which the mobile telephone of FIG. 1 may operate.

### DETAILED DESCRIPTION OF EMBODIMENTS

Exemplary embodiments of the present invention provide for an improved input device for a portable electronic device. The input device is user friendly despite accommodating the small size of a portable electronic device, while still permitting broad functionality.

The input device may be a keypad input device in which at least a portion of the keys are dual-input keys. Although the invention is described with respect to an exemplary embodiment in which the input device uses keypad buttons, other input devices may be employed. For example, the input device may include keys that are flat touchpad surfaces, or the input device may include keys provided on a touch screen surface. Of the dual inputs, one input is a proximate input, such as a capacitive input, that may sense a finger, stylus, or other instrument proximate to or touching the key. The other input is a tactile input that responds to physical pressing of the key.

As further described below, the capacitive inputs typically may be used for navigation type functions, such as scrolling, zooming, moving a cursor or pointer, and the like. The tactile inputs may be employed for inputs typically associated with a particular input key. Such inputs may include character entry (numerical, text, symbols, etc), key-dedicated functional inputs (e.g., a call "send" key or other key command), and the like. In one embodiment, a user may manually select either a tactile input mode or capacitive input mode depending upon what type of inputs the user intends to make. In another embodiment, the device may have an "auto mode" that automatically selects the capacitive or tactile input mode based on the functional or operational state of the device, or based upon the nature or a characteristic of a user input.

Embodiments of the present invention will now be described with reference to the drawings, wherein like reference numerals are used to refer to like elements throughout. It will be understood that the figures are not necessarily to scale.

The following description is made in the context of a conventional mobile telephone. It will be appreciated that the invention is not intended to be limited to the context of a mobile telephone and may relate to any type of appropriate electronic device, examples of which include a media player, a gaming device, or a desktop or laptop computer. Other devices may include various forms of portable radio communication equipment or mobile radio terminal, such as mobile telephones, pagers, communicators, electronic organizers, personal digital assistants (PDAs), smartphones, and any portable communication apparatus or the like.

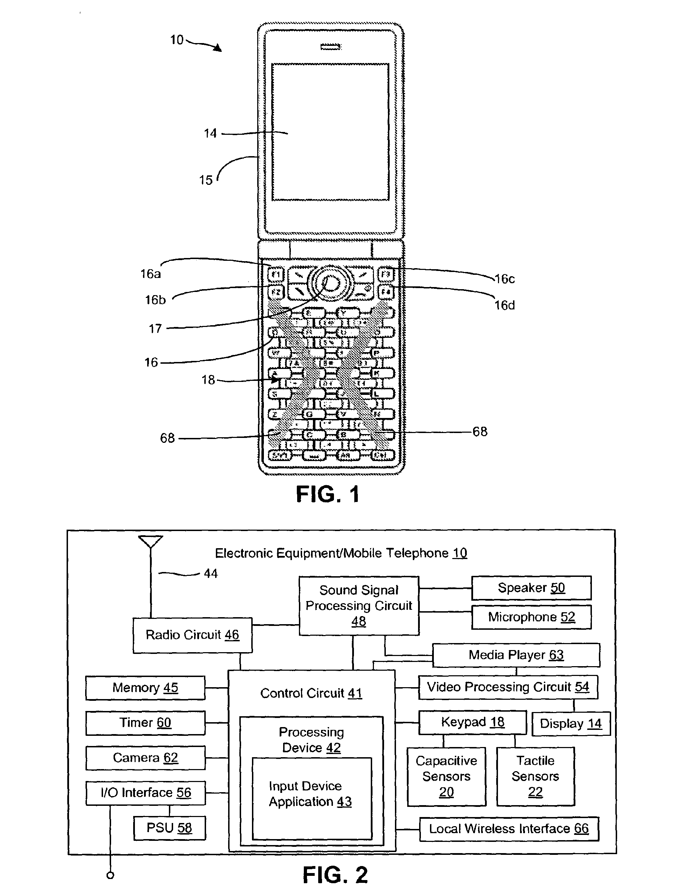

FIG. 1 depicts an exemplary mobile telephone 10, and FIG. 2 represents a functional block diagram of operative portions of the mobile telephone 10. Mobile telephone 10 may be a clamshell phone with a flip-open cover 15 movable between an open and a closed position. In FIG. 1, the cover is shown in the open position. It will be appreciated that mobile telephone 10 may have other configurations, such as a "block" or "brick" configuration, slide cover configuration, swivel cover configuration, or others.

The mobile telephone 10 may include an input device application 43 for carrying out the features of the invention. Application 43 may be embodied as executable program code that is resident in and executed by the mobile telephone 10. The mobile telephone 10 may include a controller that executes the program code stored on a computer or machine-readable medium. The controller may include a control circuit 41 and/or a processing device 42. The program may be a stand-alone software application or form a part of a software application that carries out additional tasks related to the mobile telephone 10. It will be apparent to a person having ordinary skill in the art of computer programming, and specifically in application programming for cameras, mobile telephones or other electronic devices, how to program a mobile telephone to operate and carry out logical functions associated with application 43. Accordingly, details as to specific programming code have been left out for the sake of brevity. Also, while the code may be executed by control circuit 41 in accordance with an exemplary embodiment, such controller functionality could also be carried out via dedicated hardware, firmware, software, or combinations thereof, without departing from the scope of the invention.

A keypad 18 provides for a variety of user input operations. For example, keypad 18 typically includes alphanumeric keys 16 in the form of keypad buttons for allowing entry of alphanumeric information such as telephone numbers, phone lists, contact information, notes, etc. In addition, keypad 18 typically includes special function keys such as a "send" key for initiating or answering a call. Special function keys also may include menu navigation and select keys to facilitate navigating through a menu displayed on a display 14. For example, mobile telephone 10 may include functional keys that each correspond to a different function of the mobile telephone. In this example, the keypad includes a full "QWERTY" style keyboard and a variety of function keys, examples of which are labeled as 16a-d. For example, mobile telephone 10 may have functional key buttons to activate a camera, email function, web browser, media player, or others. It will be appreciated that alternative or additional functional keys may be employed. In addition, functional keys may be preset by the manufacturer, or programmed by the user as is conventional. Mobile telephone 10 also may include a five-way navigational surface 17, which may perform a variety of navigational and input functions. In addition or alternatively to keypad buttons, some or all of the keys may be flat touch pad surfaces, or may be used in conjunction with the display as soft keys. Keys or key-like functionality also may be embodied as a touch screen associated with the display 14.

As shown in FIG. 2, mobile telephone 10 also may include capacitive sensors 20 associated with at least a portion of the keys of the keypad 18. The capacitive sensors 20 are in communication with the keypad 18. When a user places a finger, stylus, or other input instrument near a key on keypad 18, the capacitive sensors sense the presence of the finger/input instrument. In one embodiment, the capacitive sensors are activated when the finger/input instrument is placed in close proximity to a key button. The capacitive sensors thus may be short-range sensors configured to have the sensitivity to distinguish the precise key button about which a finger/input instrument is near. In another embodiment, the capacitive sensors may be activated when a finger/input instrument touches (but does not press) a given key button.

Although the use of capacitive sensors is described as an exemplary embodiment, other short-range or touch sensors may be employed. All sensors of this type are referred to herein collectively as "proximate sensors". Proximate sensors are sensors that may detect when a finger, stylus, or other input instrument is proximate to or touching, but not pressing, a keypad button, which commensurately may be referred to herein as a "proximate input". In addition to capacitive sensors, other examples of proximate sensors may include magnetic or inductive sensors.

Mobile telephone 10 also may include tactile sensors 22 associated with at least a portion of the keys of the keypad 18. The tactile sensors sense when a tactile input is applied, such as by pressing (and not merely touching) a key on keypad 18.

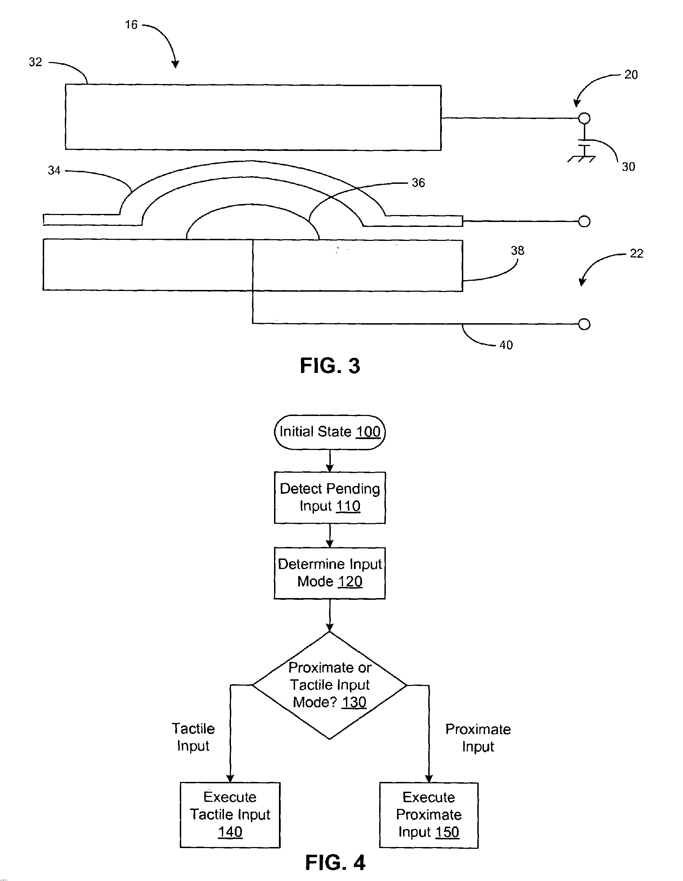

FIG. 3 depicts an exemplary dual-input key 16 that may be used as a button on keypad 18. The key 16 may include a button surface 32 that the user may touch, press, or otherwise deliver a proximate or tactile input with a finger, stylus, or other input instrument. As one of the dual inputs, the key button surface 32 may be associated with one of the capacitive sensors 20 that includes capacitive circuitry 30. The capacitive circuitry 30 may detect a change in capacitance when a finger or other input instrument is near or touches the button surface 32, thereby producing a proximate or capacitive input.

As the second of the dual inputs, button surface 32 also may be associated with a tactile sensor 22. When the key is pressed, the button surface 32 depresses a conductive surface 34 made of a conductive material as is known in the art. When depressed, the conductive surface 34 meets electrical contact 36 mounted on a circuit board 38. Electrical leads 40 complete a circuit to create an electrical input in response to a tactile press of the key 16.

It will be appreciated that whether a capacitive input or tactile input is preferable may depend upon the mode or operational state of the device. For example, a capacitive input may be preferred for navigation type operations, such as scrolling through a menu list, a series of icons, content that extends beyond the physical screen, or the like. In contrast, tactile inputs may be preferred for entering data, such as, for example, telephone numbers or text messages, or for entering dedicated input commands, such as, for example, pressing a "send" key to initiate a call. Described below are exemplary embodiments for discerning between a capacitive or other proximate input mode, versus a tactile or pressing input mode.

Referring again to FIG. 1, in one exemplary embodiment, the mobile telephone 10 has one or more capacitive or proximate input zones 68, as represented by the shaded regions in the figure. The capacitive zones 68 may include a plurality of key capacitive sensors 22 that are linked or otherwise in communication with one another. In this manner, a continuous proximate input zone is provided by which a user may enter a variety of navigational inputs. For example, if a user wants to scroll along a menu or other display items, the user may run a finger or input instrument along one or more of the proximate input zones. A similar operation may be used to employ other navigational inputs, such as controlling a cursor in a "mouse" type function, moving an object on screen, moving the viewing window of the display to navigate to virtual regions off-screen, zooming in and out, and others. Regardless of the particular operation, the navigation may be in the direction of the motion of the user. For example, to scroll downward, a user may run a finger or input instrument downward along one of the proximate input zones 68.

As another example, different capacitive or proximate input zones may be provided with different navigational functions or directional commands. For example, in FIG. 1 the left navigational zone may be used to scroll up and down, while the right navigational zone may be used to scroll right and left. Similarly, the left navigational zone may be used to move an object, while the right navigational zone may be used to zoom in and out. Other various configurations may be employed, and the configurations may be set at the time of manufacture and/or altered or defined by the user as is conventional for defining user settings in a portable electronic device. In addition, different configurations may be selected automatically or by the user depending on the operational mode or state of the device.

In the example of FIG. 1, the proximate input zones 68 each have a V-shape that is particularly suited for a portable electronic device. This V-shaped configuration may be referred to herein as a "V-Pad". Specifically, when a user grips the device, the user's thumbs may conveniently rest about the proximate input zones 68. It will be appreciated, however, that the precise shape, physical configuration, functional configuration, and other characteristics of the keypad 18 (keys 16 and zones 68) may be varied. In addition, although as an exemplary embodiment the proximate input zones may receive capacitive inputs, it will be appreciated that more broadly the zones 68 may receive proximate inputs based on any suitable technology as described above.

In the example of FIG. 1, the keys 16 of keypad 18 are configured to form a conventional "QWERTY" style keyboard. Each key 16, whether part of the QWERTY keyboard and/or any special function keys, may receive a tactile input from a user by virtue of a user pressing on the key with a finger or input instrument. It will be appreciated that other styles or configurations of tactile keys or keyboards may be employed.

As shown in FIG. 1, to conserve space on the portable electronic device 10, the proximate input zones 68 are provided in overlapping fashion with the keys 16 such that at least a portion of the keys are dual input keys. Although such a configuration conserves space, an issue arises from the fact that many of the keys 16 may be operable by both a capacitive input (or other proximate input) and a tactile input. In one embodiment, a user may select a tactile input mode in which only tactile inputs may be received by one or more of the keys 16, or alternatively a user may select a capacitive or proximate input mode in which only capacitive (or other proximate) inputs may be received by one or more of the keys 16. A tactile or capacitive input mode may be selected from a menu, with a dedicated key input, or by any conventional means. Relatedly, a user may select a setting by which one of the modes become a default mode when the device is initially powered on.

In one embodiment, the input device application 43 may include an "auto mode" feature. It will be appreciated that the electronic device 10, as is common, is operable in a plurality of functional modes or device states. In one embodiment of the auto mode, the application 43 may automatically determine an input mode, either a proximate input mode or tactile input mode, based upon a functional mode or operational state of the device. In another embodiment of the auto mode, the input mode may be determined automatically based on a characteristic of a user input. Once the input mode is determined, user inputs to a dual input key may be executed as either a proximate input or a tactile input as is commensurate with the determined input mode.

For example, suppose a user enters a calling mode by any conventional means. Upon first entering the calling mode, a user typically would next select a dedicated key input. For example, a user may wish to input a numerical series corresponding to a telephone number, or type in a character set corresponding to a name of a contact. The application 43, therefore, would automatically set the input mode of the keypad 18 to a tactile input mode, as the receipt of one or more tactile inputs may be probable. A user, however, may not enter a number or character as a tactile input. For example, a user may provide a dedicated key input for the opening of a contact list. Once the contact list is open, the application 43 may sense that a navigation input may be more appropriate, such as scrolling through the contact list. Application 43, therefore, would automatically set the input mode of the keypad 18 to a proximate input mode, as the receipt of one or more proximate inputs may be probable. In various exemplary embodiments, the application 43 may determine whether a tactile or capacitive (proximate) input mode is more appropriate, and commensurately cause the execution of inputs to dual input keys as proximate or tactile inputs based on the determined input mode.

The input device may distinguish between tactile and proximate inputs in other ways as well. For example, a user may manually override the auto mode and manually select either the tactile input or proximate input mode. As another example, certain keys may be capable of only a tactile or proximate input. Referring to the above calling example and FIG. 1, suppose again that the user has opened a contact list. The application may select a capacitive input mode as to keys within the zones 68. Inputs to these zones, therefore, may be sensed as capacitive inputs to permit the user to scroll through the various contacts. However, in this example, the center button of key navigational ring 17, and/or a "send" key such as the key 16a, may not be capable of a capacitive input being outside of zones 68. A user, therefore, may scroll to the desired contact using zones 68 and then press the center button to select the contact, and/or the send key to initiate the call. Different input capabilities of the various keys, therefore, may enhance the ability of the input device to distinguish between capacitive and tactile inputs.

For keys having the dual-input capability, such as the keys in zone 68, application 43 also may determine the device setting as the proximate input mode or the tactile input mode based on the nature or a characteristic of a user input. For example, as a user places a finger or input instrument proximate to a given key in one of the zones 68, a capacitive or proximate input may first be sensed as the finger or input instrument draws near and touches the key. A time delay function may then be initiated. For example, the electronic device 10 may include a timer 60 for measuring a time delay from the detection of a proximate input to a dual input key. When a tactile input is received within the predetermined time delay, i.e., the user actually presses the key, application 43 may set the device to the tactile input mode insofar as the user pressed the key. Tactile inputs may then be executed.

When, however, no tactile input is received within the predetermined time delay after a proximate input is sensed, application 43 may set the device to the capacitive (proximate) input mode. The proximate input mode may be set for the single key, or alternatively may be set for all the dual input keys within the zones 68 to presume a series of capacitive inputs is likely to follow the initial capacitive input. This presumption is based on the likelihood that typical navigation functions may be performed by moving the input instrument over a plurality of keys with the capacitive input capability. In exemplary embodiments, the initial predetermined time delay may be from one millisecond to one second. It will be appreciated that alternative ways to distinguish between capacitive and tactile inputs may be employed.

In accordance with the above, FIG. 4 depicts an exemplary method of employing an input device in accordance with an embodiment of the present invention. Although the exemplary method is described as a specific order of executing functional logic steps, the order of executing the steps may be changed relative to the order described. Also, two or more steps described in succession may be executed concurrently or with partial concurrence. It is understood that all such variations are within the scope of the present invention.

At step 100, mobile telephone 10 may be present in an initial state. The initial state may be, for example, any functional or operation mode or state of the device. At step 110, the input device may detect a pending or potential input. For example, as a finger, stylus, or input instrument comes in contact with or proximate to the input device, a pending input may be detected. It will be appreciated that at this stage, it is unknown whether the input is intended to be a capacitive input (or other proximate input) or a tactile input. Accordingly, at steps 120 and 130 the electronic device controller, such as via the execution of application 43, may determine and set the input mode of the input device. As described above, the input mode may be either a proximate input mode in which a proximate input, such as a capacitive input, may be received. Alternatively, the input mode may be a tactile input mode in which a tactile input may be received. If at step 130 the input mode is set to be the tactile input mode, at step 140 tactile inputs may be executed. If, however, at step 130 the input mode is set to be the proximate input mode, at step 150 proximate inputs may be executed.

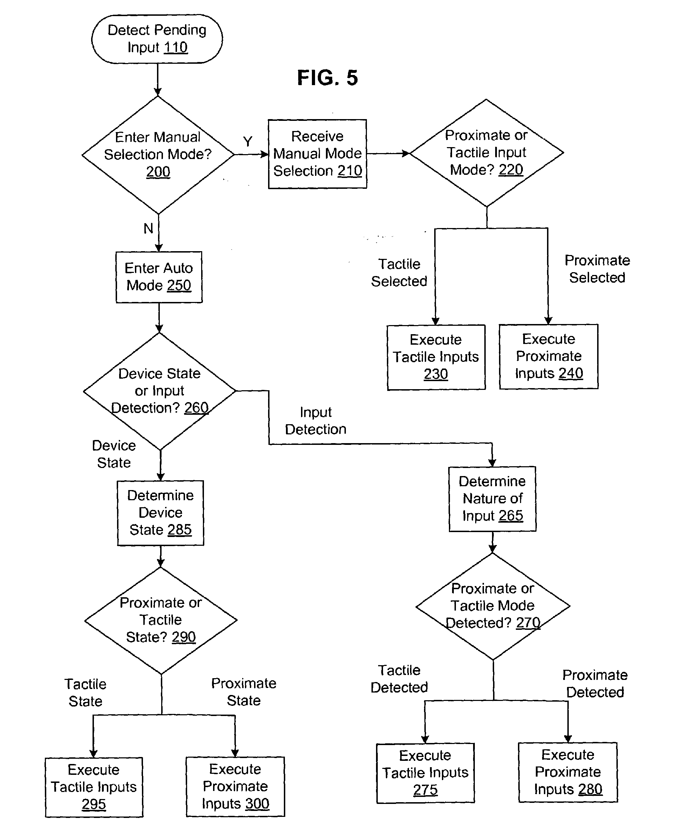

The manner by which the controller of the electronic device may determine the input mode (tactile or proximate/capacitive) will now be depicted in greater detail than in FIG. 4. FIG. 5 depicts an exemplary method by which the controller of the electronic device may determine the input mode for executing inputs to the input device. Although the exemplary method is described as a specific order of executing functional logic steps, the order of executing the steps may be changed relative to the order described. Also, two or more steps described in succession may be executed concurrently or with partial concurrence. It is understood that all such variations are within the scope of the present invention.

The method may begin at step 110 from FIG. 4, at which a pending input may be detected. At step 200, the controller may first determine whether the electronic device has entered a manual selection mode in which a user may select the input mode. A user may enter a manual selection mode by selection from a menu, a dedicated key input, as a default setting, or by any conventional means. If the manual selection mode has been entered, at step 210 the controller may receive a manual selection of an input mode, which, as depicted in step 220, may be the selection of either a tactile input or proximate input mode. Again, a user may select the input mode by any conventional means. If at step 220 the user has selected a tactile input mode, at step 230 tactile inputs may be executed. If, however, at step 220 the user has selected a proximate input mode, at step 240 proximate inputs may be executed.

Referring back to step 200, if at step 200 it is determined that a manual selection mode has not been entered, the method may proceed to step 250 at which an "auto mode" is entered. As stated above, an auto mode is a mode in which it is determined automatically whether the input device (keypad 18) is to be set to a tactile input mode or a proximate/capacitive input mode. At step 260, a determination may be made as to which of two auto modes described above may be employed. One such mode is a device state mode, in which whether the input mode will be set as the tactile input mode or the proximate/capacitive input mode may be based upon the functional or operational state of the device. An alternative auto mode may be an input detection mode, in which whether the input mode will be set as the tactile input mode or proximate/capacitive input mode may be based upon the nature or a characteristic of the user input.

If at step 260 the controller is set to an input detection mode, the method may proceed to steps 265 and 270 at which a determination may be made as to whether the input characteristic is indicative of a proximate input mode or a tactile input mode. As stated above, such a determination may be made based upon the physical characteristics of an input, such as, for example, whether or not placing an input instrument near a key is followed by a tactile input within a given time delay period. The determination may also be based upon the capabilities of a key, such as, for example, whether a key is capable of only a particular category of input (tactile versus proximate/capacitive). If at step 270 it is determined that a tactile input mode is detected, at step 275 tactile inputs may be executed. If, however, at step 270 it is determined that a capacitive or other proximate input mode is detected, at step 280 proximate inputs may be executed.

Referring back to step 260, if the controller is set to a device state mode, the method may proceed to steps 285 and 290 at which a determination may be made as to whether the device state is more likely associated with proximate inputs or tactile inputs. As stated above, such a determination may be made based upon, for example, whether the device state typically would be associated with navigational type inputs, which are more inclined toward proximate inputs, or whether the device state typically would be associated with singular or dedicated inputs (such as inputting characters or dedicated key commands), which are more inclined toward tactile inputs. If at step 290 it is determined that a tactile device state is detected, at step 295 tactile inputs may be executed. If, however, at step 290 it is determined that a capacitive or other proximate device state is detected, at step 300 proximate inputs may be executed.

In the above examples, the two auto modes - input detection and device state - have been described as distinct or separate modes of operation. It will be appreciated, however, that both auto modes may operate wholly or partly in tandem. For example, application 43 may consider both the device state and a characteristic of the input when determining whether the input mode is to be set as either the proximate input mode or the tactile input mode.

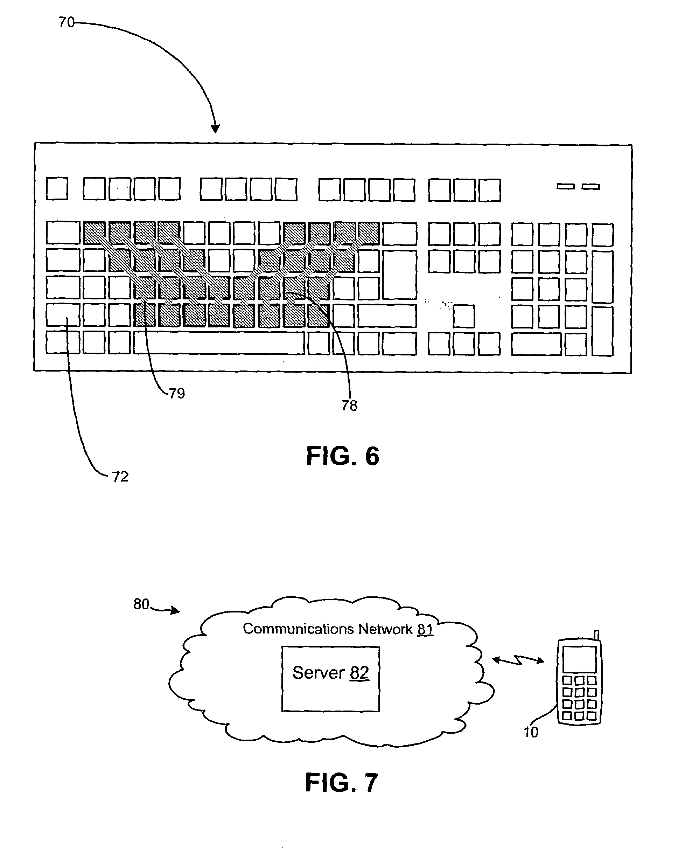

Although the input device of the present invention has been described with reference to a QWERTY style keyboard on a portable electronic device, it will be appreciated that comparable principles may be applied to other keyboard styles having other key configurations. For example, FIG. 6 depicts an example of a keyboard 70 having a configuration of keys 72 that may be typical of electronic devices such as laptop or desktop computers. The keyboard 70 includes zones 78, indicated in the figure by the shaded regions, that may provide capacitive or proximate input capabilities for a portion of the keys 72. The zones 78 include connective paths 79 for placing keys within zones 78 in signal communication with one another, such that the zones 78 form continuous proximate input zones. As seen in the figure, the regions 78 are provided in a V-Pad style configuration similar to the V-Pad configuration that may be employed in a portable electronic device. It will be appreciate, however, that the configuration of the zones 78 may be varied. The zones 78 may be considered comparable in function and operation to the zones 68 described with respect to the above embodiments in connection with a portable electronic device. In this manner, the dual input functionality described herein may be incorporated into essentially any keyboard, key configuration, or comparable input device.

Accordingly, with the described systems and methods, an improved input device is provided. The input device provides for overlapping capacitive and tactile functionality for at least a portion of the keys of the input device, thereby permitting the input device to be accommodated within the small dimensions typical of portable electronic devices. Broad functionality is not compromised.

Additional features of the mobile telephone 10 will now be described. For the sake of brevity, generally conventional features of the mobile telephone 10 will not be described in great detail herein.

Referring again to FIG. 2, the mobile telephone 10 includes call circuitry that enables the mobile telephone 10 to establish a call and/or exchange signals with a called/calling device, typically another mobile telephone or landline telephone, or another electronic device. The mobile telephone 10 also may be configured to transmit, receive, and/or process data such as text messages (e.g., colloquially referred to by some as "an SMS," which stands for simple message service), electronic mail messages, multimedia messages (e.g., colloquially referred to by some as "an MMS," which stands for multimedia message service), image files, video files, audio files, ring tones, streaming audio, streaming video, data feeds (including podcasts) and so forth. Processing such data may include storing the data in a memory 45, executing applications to allow user interaction with data, displaying video and/or image content associated with the data, outputting audio sounds associated with the data and so forth.

The mobile telephone 10 may include an antenna 44 coupled to a radio circuit 46. The radio circuit 46 includes a radio frequency transmitter and receiver for transmitting and receiving signals via the antenna 44 as is conventional. The mobile telephone 10 further includes a sound signal processing circuit 48 for processing audio signals transmitted by and received from the radio circuit 46. Coupled to the sound processing circuit 48 are a speaker 50 and microphone 52 that enable a user to listen and speak via the mobile telephone 10 as is conventional.

Mobile telephone 10 has a display 14 viewable when the clamshell telephone is in the open position. The display 14 displays information to a user regarding the various features and operating state of the mobile telephone 10, and displays visual content received by the mobile telephone 10 and/or retrieved from a memory 45 (FIG. 2). Also, the display 14 may be used as an electronic viewfinder for a camera assembly 62. The display 14 may be coupled to the control circuit 41 by a video processing circuit 54 that converts video data to a video signal used to drive the various displays. The video processing circuit 54 may include any appropriate buffers, decoders, video data processors and so forth. The video data may be generated by the control circuit 41, retrieved from a video file that is stored in the memory 45, derived from an incoming video data stream received by the radio circuit 48, played by a media player 63, or obtained by any other suitable method.

The mobile telephone 10 also may include a local wireless interface 66, such as an infrared transceiver and/or an RF adaptor (e.g., a Bluetooth adapter), for establishing communication with an accessory, another mobile radio terminal, a computer or another device. For example, the local wireless interface 66 may operatively couple the mobile telephone 10 to a headset assembly (e.g., a PHF device) in an embodiment where the headset assembly has a corresponding wireless interface.

The mobile telephone 10 also may include an I/O interface 56 that permits connection to a variety of I/O conventional I/O devices. One such device is a power charger that can be used to charge an internal power supply unit (PSU) 58.

With additional reference to FIG. 7, the mobile telephone 10 may be configured to operate as part of a communications system 80. The system 80 may include a communications network 81 having a server 82 (or servers) for managing calls placed by and destined to the mobile telephone 10, transmitting data to the mobile telephone 10 and carrying out any other support functions. The server 82 communicates with the mobile telephone 10 via a transmission medium. The transmission medium may be any appropriate device or assembly, including, for example, a communications tower (e.g., a cell tower), another mobile telephone, a wireless access point, a satellite, etc. Portions of the network may include wireless transmission pathways. The network 81 may support the communications activity of multiple mobile telephones 10 and other types of end user devices. As will be appreciated, the server 82 may be configured as a typical computer system used to carry out server functions and may include a processor configured to execute software containing logical instructions that embody the functions of the server 82 and a memory to store such software.

Although the invention has been shown and described with respect to certain preferred embodiments, it is understood that equivalents and modifications will occur to others skilled in the art upon the reading and understanding of the specification. The present invention includes all such equivalents and modifications, and is limited only by the scope of the following claims.

## Claims

1. An input device (18) for use in an electronic device (10) comprising a plurality of keys (16),
wherein
at least a portion of the plurality of keys are dual input keys that include a proximate sensor (20) for receiving a proximate input and a tactile sensor (22) for receiving a tactile input;
the device further comprising a controller (41, 42) configured to determine an input mode, wherein the input mode is either a proximate input mode or a tactile input mode, and configured to execute a user input to one of the dual input keys as either a tactile input or a proximate input as commensurate with the determined input mode, wherein the controller (41, 42) is configured to determine the input mode as the proximate input mode or the tactile input mode based upon a characteristic of the user input, wherein the controller (41, 42) further is configured to set the input mode to the tactile input mode when a dual input key (16) is pressed within a specified time delay from the detection of a proximate input to the dual input key and wherein the controller (41, 42) further is configured to set the input mode to the proximate input mode when a dual input key (16) is not pressed within the time delay after the detection of the proximate input.

2. The input device (18) according to claim 1, wherein the dual input keys (16) form a continuous proximate input zone (68) on the input device.

3. The input device (18) according to claim 2, wherein the continuous proximate input zone (68) has a V-shape.

4. The input device (18) according to any of claims 1-3, wherein the proximate sensor (20) of each of the dual-input keys (16) is a capacitive sensor for receiving a capacitive input.

5. The input device (18) according to any of claims 1-4, wherein the electronic device (10) is operable in a plurality of device states, and the controller (41, 42) is further configured to determine the device state and set the input mode as the proximate input mode or the tactile input mode based upon the determined device state.

6. The input device according (18) to any of claims 1-5, wherein the controller (41, 42) is configured to receive a user input corresponding to a selection of an input mode, and is configured to set the input mode to either the tactile input mode or the proximate input mode as is commensurate with the user selected input mode.

7. A method of employing an input device (18) for use in an electronic device (10), wherein the input device includes a plurality of keys (16),
wherein
at least a portion of the plurality of keys are dual input keys for receiving a proximate input and a tactile input, the method comprising the steps of:
receiving a user input to one of the dual input keys;
determining an input mode, wherein the input mode is either a proximate input mode or a tactile input mode; and wherein determining the input mode further comprises determining a characteristic of the user input and deciding whether the characteristic of the user input is associated with a proximate input or a tactile input, wherein the input mode is set to either the proximate input mode or the tactile input mode as is commensurate with the characteristic of the user input and measuring a time delay from a detection of a proximate input, wherein the input mode is set to the tactile input mode when a dual input key (16) is pressed within the time delay, wherein the input mode is set to the proximate input mode when a dual input key (16) is not pressed within the time delay from the detection of the proximate input
executing the user input as either a proximate input or a tactile input as is commensurate with the determined input mode.

8. The method according to claim 7, wherein the proximate input is a capacitive input.

9. The method according to any of claims 7-8, wherein the determining step comprises receiving a user input corresponding to a selection of either the proximate input mode or the tactile input mode, and the input is executed as either a proximate input or a tactile input as is commensurate with the user selected input mode.

10. The method according to claim 7, wherein the determining step comprises determining a device state of the electronic device (10) and deciding whether the device state is a proximate input state or a tactile input state, and the input mode is set as either the proximate input mode or the tactile input mode as is commensurate with the state of the electronic device.

## Patentansprüche

1. Eingabegerät (18) zur Verwendung in einem elektronischen Gerät (10), umfassend eine Mehrzahl von Tasten (16),
wobei
es sich wenigstens bei einem Teil der Mehrzahl von Tasten um Zweifach-Eingabe-Tasten handelt, die einen Immediatsensor (20) zum Empfangen einer Schnelleingabe und einen Berührungssensor (22) zum Empfangen einer Berührungseingabe umfassen;
das Gerät ferner eine Steuerung (41, 42) umfasst, die so konfiguriert ist, dass sie einen Eingabemodus bestimmt, wobei der Eingabemodus entweder ein Schnelleingabemodus oder ein Berührungseingabemodus ist, und so konfiguriert ist, dass sie eine Benutzereingabe für eine der Zweifach-Eingabe-Tasten entsprechend dem bestimmten Eingabemodus entweder als eine Berührungseingabe oder eine Schnelleingabe ausführt, wobei die Steuerung (41, 42) so konfiguriert ist, dass sie den Eingabemodus als den Schnelleingabemodus oder den Berührungseingabemodus basierend auf einer Charakteristik der Benutzereingabe bestimmt, wobei die Steuerung (41, 42) ferner so konfiguriert ist, dass sie den Eingabemodus auf den Berührungseingabemodus festlegt, wenn eine Zweifach-Eingabe-Taste (16) innerhalb einer spezifizierten Zeitverzögerung ab der Erkennung einer Schnelleingabe für die Zweifach-Eingabe-Taste gedrückt wird, und wobei die Steuerung (41, 42) ferner so konfiguriert ist, dass sie den Eingabemodus auf den Schnelleingabemodus festlegt, wenn eine Zweifach-Eingabe-Taste (16) nicht innerhalb der Zeitverzögerung nach der Erkennung der Schnelleingabe gedrückt wird.

2. Eingabegerät (18) nach Anspruch 1, wobei die Zweifach-Eingabe-Tasten (16) eine kontinuierliche Schnelleingabezone (68) auf dem Eingabegerät bilden.

3. Eingabegerät (18) nach Anspruch 2, wobei die kontinuierliche Schnelleingabezone (68) eine V-Form aufweist.

4. Eingabegerät (18) nach einem der Ansprüche 1 bis 3, wobei der Immediatsensor (20) jeder der Zweifach-Eingabe-Tasten (16) ein kapazitiver Sensor zum Empfangen einer kapazitiven Eingabe ist.

5. Eingabegerät (18) nach einem der Ansprüche 1 bis 4, wobei das elektronische Gerät (10) in einer Mehrzahl von Gerätezuständen betrieben werden kann, und die Steuerung (41, 42) ferner so konfiguriert ist, dass sie den Gerätezustand bestimmt und basierend auf dem bestimmten Gerätezustand den Eingabemodus als den Schnelleingabemodus oder den Berührungseingabemodus festlegt.

6. Eingabegerät (18) nach einem der Ansprüche 1 bis 5, wobei die Steuerung (41, 42) so konfiguriert ist, dass sie eine Benutzereingabe empfängt, die einer Auswahl eines Eingabemodus entspricht, und so konfiguriert ist, dass sie den Eingabemodus entsprechend dem vom Benutzer ausgewählten Eingabemodus entweder auf den Berührungseingabemodus oder den Schnelleingabemodus festlegt.

7. Verfahren zum Einsetzen eines Eingabegeräts (18) zur Verwendung in einem elektronischen Gerät (10), wobei das Eingabegerät eine Mehrzahl von Tasten (16) umfasst, wobei
es sich wenigstens bei einem Teil der Mehrzahl von Tasten um Zweifach-Eingabe-Tasten zum Empfangen einer Schnelleingabe und Berührungseingabe handelt, wobei das Verfahren die folgenden Schritte umfasst:
Empfangen einer Benutzereingabe für eine der Zweifach-Eingabe-Tasten;
Bestimmen eines Eingabemodus, wobei der Eingabemodus entweder ein Schnelleingabemodus oder ein Berührungseingabemodus ist; und wobei das Bestimmen des Eingabemodus ferner ein Bestimmen einer Charakteristik der Benutzereingabe und ein Entscheiden umfasst, ob die Charakteristik der Benutzereingabe mit einer Schnelleingabe oder einer Berührungseingabe assoziiert ist, wobei der Eingabemodus entsprechend der Charakteristik der Benutzereingabe und Messung einer Zeitverzögerung ab einer Erkennung einer Schnelleingabe entweder auf den Schnelleingabemodus oder den Berührungseingabemodus festgelegt wird, wobei der Eingabemodus auf den Berührungseingabemodus festgelegt wird, wenn eine Zweifach-Eingabe-Taste (16) innerhalb der Zeitverzögerung gedrückt wird, wobei der Eingabemodus auf den Schnelleingabemodus festgelegt wird, wenn eine Zweifach-Eingabe-Taste (16) nicht innerhalb der Zeitverzögerung ab der Erkennung der Schnelleingabe gedrückt wird,
Ausführen der Benutzereingabe entweder als eine Schnelleingabe oder eine Berührungseingabe entsprechend dem bestimmten Eingabemodus.

8. Verfahren nach Anspruch 7, wobei die Schnelleingabe eine kapazitive Eingabe ist.

9. Verfahren nach einem der Ansprüche 7 bis 8, wobei der Bestimmungsschritt ein Empfangen einer Benutzereingabe umfasst, die einer Auswahl entweder des Schnelleingabemodus oder des Berührungseingabemodus entspricht, und die Eingabe entsprechend dem vom Benutzer ausgewählten Eingabemodus entweder als eine Schnelleingabe oder eine Berührungseingabe ausgeführt wird.

10. Verfahren nach Anspruch 7, wobei der Bestimmungsschritt ein Bestimmen eines Gerätezustands des elektronischen Geräts (10) und ein Entscheiden umfasst, ob der Gerätezustand ein Schnelleingabezustand oder ein Berührungseingabezustand ist, und der Eingabemodus entsprechend dem Zustand des elektronischen Geräts entweder als der Schnelleingabemodus oder der Berührungseingabemodus festgelegt wird.

## Revendications

1. Dispositif d'entrée (18) destiné à une utilisation dans un dispositif électronique (10) comprenant une pluralité de touches (16),
dans lequel :
au moins une partie de la pluralité de touches est constituée de touches à double entrée qui comprennent un capteur de proximité (20) destiné à recevoir une entrée de proximité et un capteur tactile (22) destiné à recevoir une entrée tactile ;
le dispositif comprenant, en outre, un dispositif de commande (41, 42) configuré pour déterminer un mode d'entrée, le mode d'entrée étant soit un mode d'entrée de proximité, soit un mode d'entrée tactile, et configuré pour exécuter une entrée utilisateur à l'une des touches à double entrée en tant qu'entrée tactile ou entrée de proximité en fonction du mode d'entrée déterminé, le dispositif de commande (41, 42) étant configuré pour déterminer le mode d'entrée en tant que mode d'entrée de proximité ou mode d'entrée tactile sur la base d'une caractéristique de l'entrée utilisateur, le dispositif de commande (41, 42) étant, en outre, configuré pour régler le mode d'entrée en mode d'entrée tactile lorsqu'une touche à double entrée (16) est pressée au cours d'une durée déterminée à partir de la détection d'une entrée de proximité à la touche à double entrée et le dispositif de commande (41, 42) étant, en outre, configuré pour régler le mode d'entrée en mode d'entrée de proximité lorsqu'une touche à double entrée (16) n'est pas pressée au cours de la durée après la détection de l'entrée de proximité.

2. Dispositif d'entrée (18) selon la revendication 1, dans lequel les touches à double entrée (16) forment une zone d'entrée de proximité continue (68) sur le dispositif d'entrée.

3. Dispositif d'entrée (18) selon la revendication 2, dans lequel la zone d'entrée de proximité continue (68) a une forme en V.

4. Dispositif d'entrée (18) selon l'une quelconque des revendications 1 à 3, dans lequel le capteur de proximité (20) de chacune des touches à double entrée (16) est un capteur capacitif destiné à recevoir une entrée capacitive.

5. Dispositif d'entrée (18) selon l'une quelconque des revendications 1 à 4, dans lequel le dispositif électronique (10) est apte à fonctionner dans une pluralité d'états de dispositif, et le dispositif de commande (41, 42) est, en outre, configuré pour déterminer l'état de dispositif et régler le mode d'entrée en mode d'entrée de proximité ou mode d'entrée tactile sur la base de l'état de dispositif déterminé.

6. Dispositif d'entrée (18) selon l'une quelconque des revendications 1 à 5, dans lequel le dispositif de commande (41, 42) est configuré pour recevoir une entrée utilisateur correspondant à une sélection d'un mode d'entrée, et est configuré pour régler le mode d'entrée en mode d'entrée tactile ou mode d'entrée de proximité en fonction du mode d'entrée sélectionné par l'utilisateur.

7. Procédé d'utilisation d'un dispositif d'entrée (18) destiné à une utilisation dans un dispositif électronique (10), le dispositif électronique comprenant une pluralité de touches (16),
dans lequel :
au moins une partie de la pluralité de touches est constituée de touches à double entrée destinées à recevoir une entrée de proximité et une entrée tactile, le procédé comprenant les étapes consistant à :
recevoir une entrée utilisateur à l'une des touches à double entrée ;
déterminer un mode d'entrée, le mode d'entrée étant soit un mode d'entrée de proximité, soit un mode d'entrée tactile ; et déterminer le mode d'entrée comprenant, en outre, l'étape consistant à déterminer une caractéristique de l'entrée utilisateur et décider si la caractéristique de l'entrée utilisateur est associée à une entrée de proximité ou à une entrée tactile, le mode d'entrée étant réglé soit en mode d'entrée de proximité, soit en mode d'entrée tactile en fonction de la caractéristique de l'entrée utilisateur et mesurer une durée à partir d'une détection d'une entrée de proximité, le mode d'entrée étant réglé en mode d'entrée tactile lorsqu'une touche à double entrée (16) est pressée au cours de la durée, le mode d'entrée étant réglé en mode d'entrée de proximité lorsqu'une touche à double entrée (16) n'est pas pressée au cours de la durée depuis la détection de l'entrée de proximité ;
exécuter l'entrée utilisateur en tant qu'entrée de proximité ou entrée tactile en fonction du mode d'entrée déterminé.

8. Procédé selon la revendication 7, dans lequel l'entrée de proximité est une entrée capacitive.

9. Procédé selon l'une quelconque des revendications 7 et 8, dans lequel l'étape de détermination comprend la réception d'une entrée utilisateur correspondant à une sélection soit du mode d'entrée de proximité, soit du mode d'entrée tactile, et l'entrée est exécutée en tant qu'entrée de proximité ou en tant qu'entrée tactile en fonction du mode d'entrée sélectionné par l'utilisateur.

10. Procédé selon la revendication 7, dans lequel l'étape de détermination comprend la détermination d'un état de dispositif du dispositif électronique (10) et l'étape consistant à décider si l'état de dispositif est un état d'entrée de proximité ou un état d'entrée tactile, et le mode d'entrée est réglé en mode d'entrée de proximité ou mode d'entrée tactile en fonction de l'état du dispositif électronique.
